(19) Europäisches Patentamt

European Patent Office

Office européen des brevets

(11) **EP 3 253 096 A1**

(12) **EUROPEAN PATENT APPLICATION**

(43) Date of publication:
06.12.2017 Bulletin 2017/49

(21) Application number: 16305632.8

(22) Date of filing: 01.06.2016

(51) Int Cl.:
*H04W 12/06* (2009.01)   *G06F 21/36* (2013.01)
*H04L 29/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LEFEBVRE, Frédéric**
**35576 Cesson-Sévigné Cedex (FR)**

• **VERDIER, Alain**
**35576 Cesson-Sévigné Cedex (FR)**
• **VINCENT, Christophe**
**35576 Cesson-Sévigné Cedex (FR)**
• **GANDON, Cyrille**
**35700 Rennes (FR)**
• **HEEN, Olivier**
**35576 Cesson-Sévigné Cedex (FR)**

(74) Representative: **Huchet, Anne**
**TECHNICOLOR**
**1-5, rue Jeanne d'Arc**
**92130 Issy-les-Moulineaux (FR)**

(54) **METHOD DEVICE AND SYSTEM FOR PAIRING A FIRST DEVICE WITH A SECOND DEVICE**

(57)     A method for pairing a first device with a second device is disclosed. A salient idea is to generate a discriminant and visually differentiable visual representation from a unique identifier of a device, to make it available for example together with the unique identifier on a printed package of the device, and to regenerate it for display as part of the pairing process. A user checking the displayed visual representation matches the printed visual representation of the package can successfully terminate a pairing process.

Figure 2

Printed by Jouve, 75001 PARIS (FR)

**Description**

1. TECHNICAL FIELD

The technical field of the disclosed method, device and system is related to device pairing, where for instance devices need to be associated for various purposes.

2. BACKGROUND ART

Device pairing is required in many different domains. For instance in WiFi wireless networks, a pairing is an association between a wireless device and an access point. In Bluetooth wireless networks, devices also need to be paired before being able to communicate. The different technologies have developed different techniques for pairing devices.

For protected WiFi networks, pairing a new device with the access point is done for instance by entering the WPA (WiFi Protected Access) key of the access point, on the mobile device and by starting the WiFi association. As entering a long security key may sometimes be tedious, some other techniques have been developed such as the "WiFi Alliance protected setup" proposing the use of a push button on the Access Point or the entry of a PIN code on both the access point and the mobile device.

For Bluetooth wireless networks, pairing two devices is done by putting both devices in a specific mode, one device discovering other devices of the neighborhood, and the user selecting from the discovered devices, the one he wants to be paired. However these pairing techniques are tightly related to the wireless networking connectivity, and are applicable only when devices are in the range of each other. As soon as the devices get disconnected, their pairing is also removed.

Pairing may also be applicable to enroll a first device towards a second device so as to provide some specific credential to the first device for controlling the second device. In such cases the pairing should be applicable independently from their local networking connectivity. There may be cases where, for example, devices are in a same wireless local area network at some point in time, and connected via other means such as wide area network at some other point in time. Known pairing techniques from the wireless networks are not applicable and there is a need for other techniques allowing to associate two devices in a convenient way and independently from their network connectivity, without the need of going through a tedious configuration process.

3. SUMMARY

A salient idea is to generate a discriminant and visually differentiable visual representation from a unique identifier of a device, to make it available for example together with the unique identifier on a printed package of the device, and to regenerate it for display as part of the pairing process. A user checking the displayed visual representation matches the printed visual representation of the package can successfully terminate a pairing process.

To that end a method for pairing a first device with a second device is disclosed, wherein the first device is associated with an identifier and a reference visual representation. The method comprises in the second device:

- Receiving the identifier associated with the first device;
- Obtaining a visual representation from a number generated by a number generator seeded with the identifier;
- Displaying the visual representation;
- Pairing the first device with the second device in case the obtained visual representation corresponds to the reference visual representation associated with the first device.

According to a particularly advantageous variant, the identifier of the first device is at least one among:

- A serial number of the first device;
- A MAC address of the first device.

According to another particularly advantageous variant, the number generator is a pseudo-random number generator.

According to another particularly advantageous variant, obtaining the visual representation further comprises:

- sending the identifier associated with the first device to a trusted third party device;
- generating an image as the visual representation from an adjusted number received from the trusted third party device, wherein a quality factor obtained from an image generated from the adjusted number is comprised in an interval of values.

According to another particularly advantageous variant, obtaining the visual representation further comprises:

- (a) generating an image from the generated number;
- (b) obtaining a quality factor from the generated image;
- in case the quality factor is not comprised in an interval of values, adjusting the generated number and iterating on steps (a) and (b) with the adjusted generated number;

wherein the visual representation is the generated image in case the quality factor is comprised in the interval of values.

According to another particularly advantageous variant, generating an image further comprises applying a random art generator to the generated number.

According to another particularly advantageous variant, adjusting comprises increasing the generated number by a constant number.

According to another particularly advantageous variant, the quality factor is obtained from a visual hash of the generated image.

According to another particularly advantageous variant, the quality factor further comprises a global entropy of the generated image, the interval of values being the values above a given value.

According to another particularly advantageous variant, the quality factor further comprises an energy of the generated image, the interval of values being the values above a first value and below a second value.

In a second aspect a device for pairing with a first device associated with an identifier and a reference visual representation is also disclosed. The device comprises:

- Means for receiving the identifier associated with the first device;
- Means for obtaining a visual representation from a number generated by a number generator seeded with the identifier;
- Means for displaying the visual representation;
- Means for pairing with the first device in case the obtained visual representation corresponds to the reference visual representation associated with the first device.

According to particularly advantageous variant, the means for obtaining the visual representation further comprise:

- Means for generating (a) an image from the generated number;
- Means for obtaining (b) a quality factor from the generated image;
- Means for adjusting the generated number in case the quality factor is not comprised in an interval of values, and iterating on generating an image and obtaining a quality factor, with the adjusted generated number, in case the quality factor is not comprised in an interval of values;

wherein the visual representation is the generated image in case the quality factor is comprised in the interval of values.

According to another particularly advantageous variant, the means for generating an image further comprise means for applying a random art generator to the generated number.

In a third aspect a computer program for pairing a first device with a second device is also disclosed, wherein the first device is associated with an identifier and a reference visual representation. The computer program comprises program code instructions executable by a processor for:

- Receiving the identifier associated with the first device;
- Obtaining a visual representation from a number generated by a number generator seeded with the identifier;
- Displaying the visual representation;
- Pairing the first device with the second device in case the obtained visual representation corresponds to the reference visual representation associated with the first device.

In a fourth aspect, a computer program product for pairing a first device with a second device is also disclosed, wherein the first device is associated with an identifier and a reference visual representation. The computer program product comprises instructions of program code executable by at least one processor for:

- Receiving the identifier associated with the first device;
- Obtaining a visual representation from a number generated by a number generator seeded with the identifier;

- Displaying the visual representation;
- Pairing the first device with the second device in case the obtained visual representation corresponds to the reference visual representation associated with the first device.

While not explicitly described, the present embodiments may be employed in any combination or sub-combination. For example, the present principles are not limited to the described variants, and any arrangement of variants and embodiments can be used. Moreover the present principles are not limited to the described pairing examples. The present principles are not further limited to the described random number generators, random art generators, and are applicable to any visual hash algorithms allowing to generate visually recognizable images. The present principles are not further limited to the described quality factors.

Besides, any characteristic, variant or embodiment described for the method is compatible with a device intended to process the disclosed method and with a computer-readable storage medium storing program instructions.

## 4. BRIEF DESCRIPTION OF THE DRAWINGS

- Figure 1 illustrates examples of devices to be paired according to a specific and non-limitative embodiment;
- Figure 2 illustrates the method for pairing a first device with a second device according to a specific and non-limitative embodiment;
- Figure 3 represents a processing device for pairing a first device with a second device according to a specific and non-limitative embodiment;
- **Figure 4** represents an exemplary architecture of the processing device of figure 3 according to a specific and non-limitative embodiment;
- **Figure 5** illustrates an exemplary quality factor computation, according to a specific and non-limitative embodiment;
- **Figure 6** illustrates an exemplary image generated by a random art image generator.

## DESCRIPTION OF EMBODIMENTS

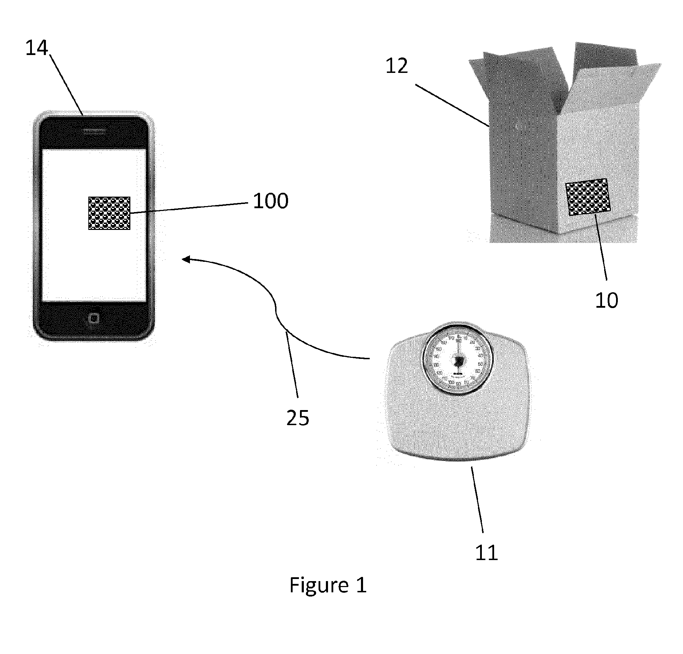

**Figure 1** illustrates an exemplary embodiment of the pairing method of a first device 11 with a second device 14. According to the illustrated example, and without limitation, the first device 11 is for example a connected scale and the second device 14 is for example a smartphone. According to the illustrated example, a user purchased a connected scale 11 and wants to pair his new scale 11 with his smartphone 14 so as to benefit from an application available for the scale. The scale was for example packaged in a box 12, and a reference visual representation 10 is for example printed on the box 12. The reference visual representation 10 has been generated from an identifier of the scale 11 with a certain guarantee that the reference visual representation 10 is visually acceptable and discriminant enough from another reference visual representation generated from an identifier of another device. For pairing the scale 11 with the smartphone 14, the user for example launches a pairing application on the smartphone 14. The scale 11 sends 25 its unique identifier to the smartphone 14. A visual representation 100 is obtained by the smartphone from a number generated by a number generator seeded with the transmitted 25 identifier of the scale. The obtained visual representation 100 is displayed by the smartphone 14, and the user is invited to provide feedback, for example by touching an area of the screen, so as to confirm that the displayed visual representation 100 matches the reference visual representation 10, and to successfully pair the scale 11 with the smartphone 14. In case the displayed visual representation 100 does not match the reference visual representation 10, the user provides feedback, for example by touching another area of the screen, so as to cancel the pairing process.

In case a plurality of devices are in the neighborhood of the smartphone 14, sending their identifier, the smartphone 14 obtains and generates a plurality of visual representations 100, inviting the user to select the visual representation 100 matching the reference visual representation 10 for pairing the appropriate device.

The generation of the reference visual representation 10 for the scale is done for example as part of the manufacturing process or as part of the packaging process of the scale, and follows the same principles as the generation of the visual representation 100 done by the smartphone 14. Same principles processed by different entities based on a same input data produce an identical output. Generating the reference visual representation 10 as part of the manufacturing process and printing it on the package is only a possible example. Many other alternatives are possible for generating and embedding a visually acceptable and discriminant reference visual representation 10 of a device and are compatible with the disclosed principles. For instance, alternatively to print the reference visual representation 10 on the package, it may also be generated online and displayed to the user as part of the pairing method. In case for example the connected device is proposed with a cloud based service, which requires a registration of the device to the cloud service, the pairing with the smartphone may be executed together with a device online registration. The generation and the display of the reference visual representation 10 may thus be performed by the cloud based service as part of the device registration.

More generally any method for generating a reference visual representation 10 of a device and for making it available to the user so that the user is able to provide feedback on the matching of a displayed visual representation 100 with the reference visual representation 10 is compatible with the disclosed principles.

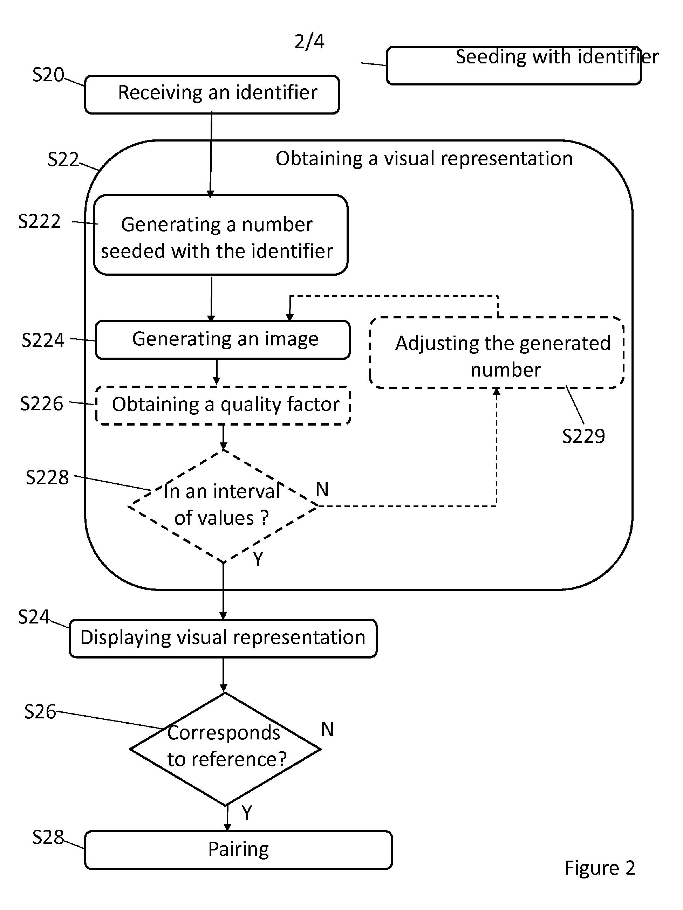

**Figure 2** illustrates the method for pairing a first device 11 with a second device 14 associated with an identifier and a reference visual representation 10 as also illustrated on figure 1.

In the second device 14, there is a step S20 of receiving of the identifier of the first device 11. In a variant, the identifier is the serial number of the first device 11. In another variant, the identifier is a MAC address of the first device 11. Any identifier variant is possible, provided the identifier uniquely identifies the first device 11 among other devices of a same sort.

In the step S22, a visual representation 100 is obtained by the second device 14, from a number generated by a number generator seeded with the identifier of the first device 11. More precisely, in the sub-step S222, the identifier of the first device 11 is used as a seed of a number generator, and a number is generated from a number generator seeded by the identifier.

For example the number generator is a random number generator or a pseudo-random number generator. In another example the number generator is a LSFR (Linear Feedback Shift Register), for example a Fibonacci LSFR or a maximum-length LSFR. Such number generators are advantageous as they generate discriminant numbers while preserving the unicity property of the identifiers. Since the operation of such a register is deterministic, the stream of values produced by the register is completely determined by its current (or previous) state. Likewise, because the register has a finite number of possible states, it must eventually enter a repeating cycle. However, an LFSR with a well-chosen feedback function produces a sequence of bits which appear to be random, having a very long cycle. Seeding such a number generator with an identifier is advantageous at two levels: first, a same number generator seeded with a same identifier will generate the same number at any point in time, whatever the device it is executed on. Second, seeding a number generator with a unique identifier preserves the unicity property. In other words numbers generated by number generators seeded by unique identifiers are also unique.

In case the number generator needs a longer seed than the identifier of the first device 11, the identifier is padded with for example zeroes so as to reach the size of the seed needed by the number generator. Any number generator that can be seeded by an identifier is compatible with the disclosed principles.

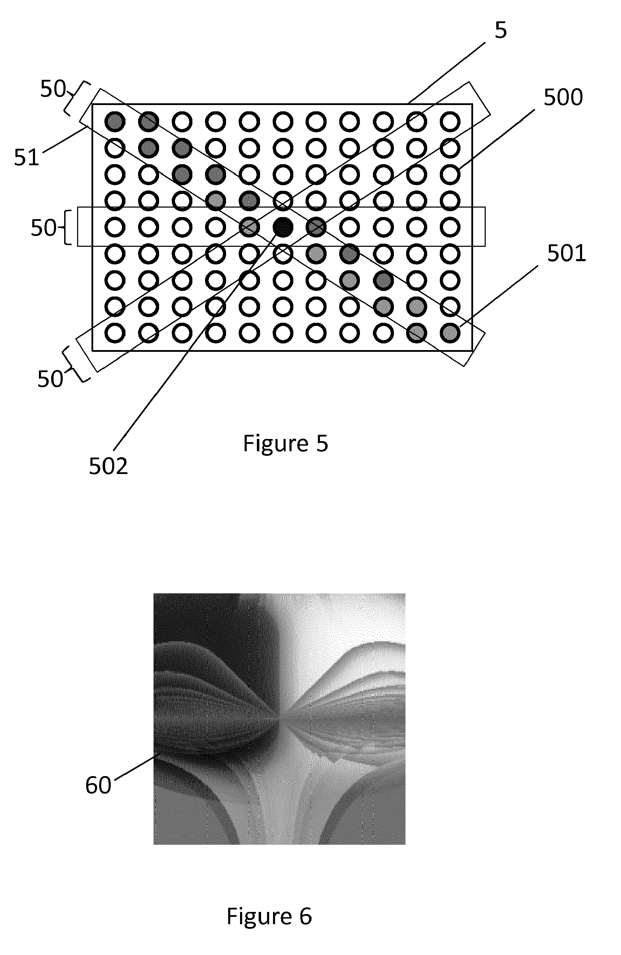

In the sub-step S224 of the step 22, an image is generated by an image generator from the number generated at sub-step S222. In a variant the image generator is a random art generator, as defined by Adrian Perrig and Dawn Song in "Hash Visualization: a new technique to improve real world security", published in the Proceedings of the 1999 International Workshop on Cryptographic Techniques and E-Commerce (CryTEC'99). Random Art is an algorithm such that, given a bit-string as input, more precisely the number generated at sub-step S222, it generates a function F : [0;1]$^2$ →[0;1]$^3$, which defines an image. The function is constructed by choosing rules from a grammar depending on the value of the number generator. The function F maps each pixel (x; y) to a RGB value (r,g,b) which is a triple of intensities for the red, green and blue values, respectively. An example of picture 60 generated by a random art generator is illustrated in **Figure 6.** Optionally in the sub-step S226, a quality factor is obtained from the image generated at the sub-step S224. According to a particular embodiment, the quality factor is obtained from a computational visual attention model as for example the technique proposed by Olivier le Meur in "a coherent computational approach to model bottom-up visual attention" published on pages 802-817 of the IEEE Transactions on Pattern Analysis & Machine Intelligence Revue, issue 5. Such computational models, used for evaluating the saliency of an image or an area of an image can be advantageously applied on the image generated in the sub-step S224, so as to evaluate the saliency of the generated image, and ensure that the evaluated saliency is above a given value, or at least in an interval of values.

According to another embodiment, a quality factor is obtained from a visual hash of the generated image. A visual hash is for example obtained from a RASH visual algorithm, as for example from the technique described in "RASH: Radon Soft hash algorithm" by F Lefebvre and B Macq, published in the Proceedings of the European Signal Processing Conference in 2002. The RASH visual algorithm is based on the variance of the pixels 501, 502 of the generated image 5 along a radial projection, as illustrated in figure 5. Considering for instance a discretization of one degree angle, a radial projection comprises an output vector of one hundred eighty elements called *nbProj.* More formally, considering a projection *j*51, comprising a set of pixels *i*501, included in the radial projection (width strip 50 of one), according to an angle θ of the radial projection, a *Rash(j)* value is written according to the following equation:

$$Rash(j) = \frac{\sum_{i=1}^{nbPixel}(Y_j(i) - \mu_{Y_j})^2}{nbPixel}, with\ j: 1..nbProj$$

$Y_j$ (*i*) being the luminance of a pixel *i*501 in the projection *j*51
$\mu_{Y_j}$ being the mean luminance of the *projection j* 51
*nbPixel* being the number of pixels of the *projection j* 51

A pixel 501 (x,y) is included in the radial projection if its coordinate p satisfies:

$$-0.5 \leq p - p' \leq 0.5$$

With (p,θ) the coordinates of the pixel 501 (x,y) and (p', θ) the coordinates of the middle pixel 502 (x',y') in the transform domain for a same given θ.

In a first variant the quality factor is defined as the global entropy of the generated image 5. The entropy is, for example, defined according to:

$$entropy(j) = \sum_i \left( -\frac{histo[bin]}{\sum histo} . log\frac{histo[bin]}{\sum histo} \middle| bin = Y_j(i) - Y_j(i-1) \right) \sum histo$$

$$GlobalEntropy = \frac{\sum_j entropy(j)}{\log(2.0)}$$

Where *histo* corresponds to the number of occurrences of $Y_j$ (*i*) - $Y_j$ (*i*-1) in the projection *j*.

the projection *j*.
$\sum histo = \sum_{bin} histo[bin]$ is equal to $nbPixel$ in the Projection *j* 51

Using the global entropy as the quality factor is advantageous as it ranks the diversity of differences between pixel colors. In other words a global entropy allows to select an image wherein the pixel color transitions have enough diversity resulting in an image with a recognizable texture, not being too uniform and not being too detailed either. Indeed, an image with too many details would be hardly recognized by a user. Indeed, it is pretty difficult to visually differentiate two highly detailed images. On the contrary, a picture with not enough details, appears closed to uniform, and may also be difficult to visually differentiate from another similar but still different image with also pretty uniform texture. The global entropy of an almost uniform image as well as the global entropy of a highly detailed image is low. Therefore, a quality factor based on the global entropy, being above a given value is an advantageous indicator that the generated image is a recognizable image (not too uniform, and not too detailed). More generally a quality factor based on the global entropy, in an interval of values between a given value and the infinity is an indicator that the generated image is a recognizable image.

In a second variant the quality factor is defined as the energy of the visual hash, for example, according to:

$$energy = \frac{\sum_j(Rash(j) - \mu_{Rash})^2}{nbProj}$$

Where $\mu_{Rash}$ is the mean of *Rash(j)*.
*NbProj* is the number of projections according to the discretization factor (in the above example *NbProj*=180).

Using the energy as the quality factor is advantageous as the energy evaluates whether most of the pixel color values are around the mean pixel color value (resulting in a uniform texture) or not (resulting in a richer texture). A high energy value of an image is an indicator that the image comprises a lot of detailed visual information making it tough to be visually differentiated from another image with also a high energy. On the contrary a low energy value of an image is an indicator that the image is relatively uniform, comprising only a few details, also making it hard to visually differentiate from another different image with also a low energy value. Therefore, a quality factor based on the energy, being above a first value is an indicator that the generated image is not too uniform, and a quality factor based on the energy, being below a second value is an indicator that the generated image is not too detailed. More generally a quality factor based on the energy, belonging to an interval of values comprising a first value and a second value is an indicator that the generated image is a visually differentiable image.

A quality factor using any combination of the energy or the global entropy is also compatible with the disclosed principles.

Optionally in the sub-step S228, the obtained quality factor is evaluated against an interval of values in any of the variants described above. An obtained quality factor above the first value or the given value indicates that the generated image is sufficiently recognizable for being used for the purpose of device pairing. On the contrary in case the obtained quality factor is not in the interval of values (depending on the quality factor variant), the number which has been generated in the sub-step S222 is further adjusted in the sub-step S229. In a first variant the number is incremented by a constant value, for example a value of ten. Any other value is compatible with the disclosed principles. In a second variant, the number is multiplied by a constant value, for example a value of two. Any other value is compatible with the disclosed principles. More generally any adjustment method applying a known operation to the generated number is compatible with the disclosed principles. The adjusted number is further used as an input in the sub-step S224 for generating an image from the adjusted number according to any variant described above. A quality factor is obtained in the sub-step S228 from the image obtained from the adjusted generated number. Optionally iterating the sub-steps S228, S229, S224 and S226 is advantageous as it allows to obtain at the end of the iteration a generated image with a quality factor in the interval of values, therefore satisfying the expected recognizable criteria. Adjusting the generated number (and not the received identifier) is advantageous as it preserves the unicity property of the adjusted generated number. Because of the number generator properties, adjusted generated numbers remain unique, while adjusting the received identifiers would not be appropriate as an adjusted received number could be the same as another identifier for another device.

In a specific and non-limiting embodiment, the iteration for generating an image wherein the quality factor is in an interval of values, is performed once, for example during the manufacturing process of the device and/or the serial number generation, and a trusted third party device is used to keep records of a device identifier (serial number) and a corresponding adjusted generated number allowing to generate an image, which quality factor is in the interval of values according to the disclosed principles in any of its variants. The trusted third party device is for example a back-end server. In this particular embodiment, after receiving an identifier in the step S20, a query is sent to the trusted third party device keeping track of the records, asking for the adjusted generated number corresponding to the received identifier. In a first variant, the received identifier of the first device is sent to the trusted third party server. In a second variant, a number is generated according to the sub-step S222 from a number generator seeded with the identifier, and the generated number is sent to the trusted third party device. An image is then generated in the step S224 from the received adjusted number, and a visual representation is displayed in the step S24. Such an embodiment is advantageous as it allows to save computation resources on the device displaying the visual representation, offloading the iterative computation of the quality factors to another device. Additionally, such a centralized iteration allows for more adjusting policies: the adjusting policy does not need to remain constant (to be reproducible with the same results at different times and devices), the adjusting policy only needs to preserve the uniqueness of the adjusted numbers.

In case a quality factor is obtained and belongs to the interval of values in any of its variants, the corresponding image is displayed in the step S24 as the visual representation 100. In case no quality factor is obtained, the generated image is displayed in the step S24 as the visual representation 100. The displayed visual representation 100 is further evaluated against the corresponding reference visual representation 10 in the step S26. In case both the displayed and the reference visual representations match, the first device 11 is paired with the second device 14 in the step S28. Pairing the second device 14 with the first device 11 for example comprises allocating some privileges to the first device 11 within the second device 14, or vice versa. For example and without limitation, once paired the first device may autonomously generate events that are logged by the second device 14 and/or notified to the user of the second device 14. For instance each time the scale is used, the measured weight is sent to the paired smartphone.

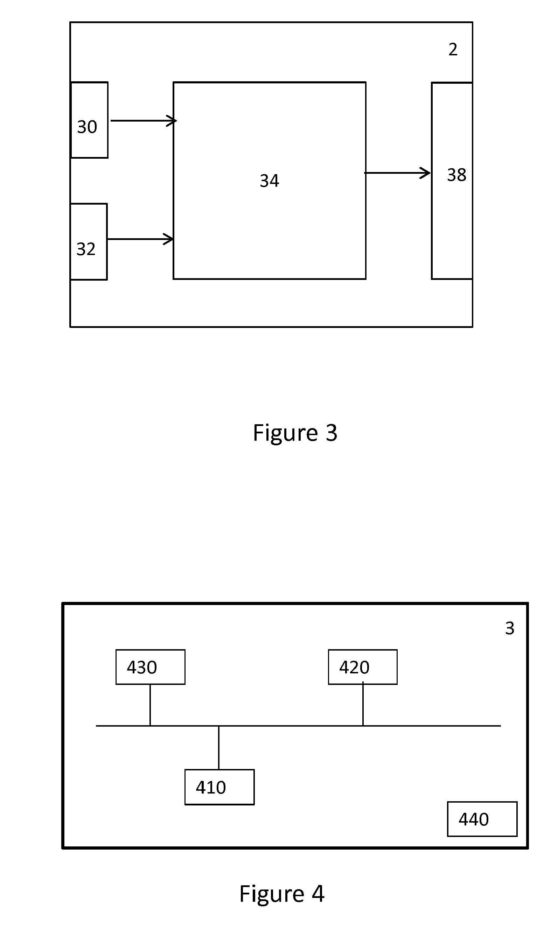

**Figure 3** depicts a processing device 3 for pairing a first device 11 with the processing device 3, wherein the first device 11 is associated with an identifier and a reference visual representation 10.

According to a specific and non-limiting embodiment, the processing device 3 comprises an input 30 configured to receive at least an identifier of the first device 11. The identifier is received from a network interface. According to different embodiments of the disclosed principles, the network interface belongs to a set comprising:

- A local area network interface such as for example Ethernet, WiFi, MoCA or a power line interface, wherein the local network interface provides a connection to a broadband delivery network via a home gateway;
- A broadband network interface, comprising a wide area network interface such as xDSL, HFC, FTTx, WiMAX.

More generally any network interface allowing to receive the identifier of the first device 11, is compatible with this principle.

The input 30 is linked to a processing module 34 configured to pair the processing device 3 with the first device 11. The processing module 34 is configured to obtain a visual representation 100 from a number generated by a number generator seeded with the received identifier of the first device 11. The obtained visual representation 100 is sent to an output 38 such as for example a display means or a network interface. According to a particular embodiment, the network interface belongs to the set described for the input 30. According to a particular embodiment, the display means is external to the device and the output 38 sends the obtained visual representation 100 to an external display means. According to different embodiments of the principle, the display means, internal or external, belongs to a set comprising:

- a personal computer screen;
- a TV screen;
- a tablet;
- a smartphone screen.

More generally any display means allowing to display the obtained visual representation 100, and any network interface allowing to send the obtained visual representation 100, are compatible with this principle.

The processing device 3 also comprises an input 32 to receive feedback data from a user. Feedback data are generated by a user via a feedback means in order to communicate to the processing device 3 that a displayed visual representation 100 corresponds to a reference visual representation 10. According to different embodiments of the principles, the drawing means belongs to a set comprising:

- a touch screen sensor and its accompanying controller based firmware able to select an area of the touch screen displaying a visual representation 100 corresponding to a reference visual representation 10;
- a mouse and its accompanying controller based firmware able to select an area displaying a visual representation 100 corresponding to a reference visual representation 10.
- a keyboard and its accompanying controller based firmware able to select an area displaying a visual representation 100 corresponding to a reference visual representation 10.
- a remote control unit communicating with the processing device 3 via an infra-red or a radio frequency interface in order to send feedback data indicating a displayed visual representation 100 corresponds to a reference visual representation 10;

More generally any feedback means allowing to send information to the processing device 3 indicating that a displayed visual representation 100 corresponds to a reference visual representation 10, is compatible with this principle.

The processing module 34 is further configured to analyze feedback data received from the input 32 and to determine from the feedback data analysis, whether the displayed visual representation 100 is being selected by a user, indicating that the displayed visual representation 100 corresponds to a reference visual representation 10. The processing module 34 is further configured to pair the processing device 3 with the first device 11 associated with the reference visual representation 10, in case the displayed visual representation 100 corresponds to the reference visual representation 10 associated with the first device 11.

According to a particular embodiment, the first device is for example a smartphone and the second device is for example a TV set, and its companion remote control. The smartphone sends its identifier, for example its serial number, to the TV set. The TV set displays a visual representation that has been obtained by the TV set from a number generated by a number generator seeded with the received identifier of the smartphone according to any variant described above. The visual representation is displayed together with a menu inviting a user to confirm that he is willing to pair the TV set with a device corresponding to that visual representation. In case the visual representation matches a reference visual representation located on the smartphone, or a package of the smartphone, the user will indicate to the TV set by using the remote control that he is willing to pair the TV set with the device. Otherwise the user will cancel the pairing.

According to another embodiment, the first device sends its identifier, for example its serial number, to a backend server via for example an Internet connection. The backend server obtains a visual representation from a number generated by a number generator seeded with the received identifier of the first device according to any variant described above. The obtained visual representation is sent back to the second device, together with the first device identifier via for example Internet. The second device displays the visual representation received from the backend server towards the user together with a menu inviting a user to confirm that he is willing to pair the first device with the second device corresponding to that visual representation. The user sends the appropriate feedback to indicate whether he confirms the pairing or not.

According to yet another embodiment, the first device sends its identifier, to a back end server that generates a visual representation from the identifier of the first device according to any variant described above. The backend server sends the visual representation to the second device, for example a TV set for being displayed towards the user together with the menu. The TV set sends back to the back end server the feedback of the user, and the pairing of the first device with the second device is performed by the backend server. Performing the pairing in the backend server is advantageous for internet of things applications, as connected objects can be provided with cloud based services.

**Figure 4** represents an exemplary architecture of the processing device 3 according to a specific and non-limiting embodiment, where the processing device 3 is configured to pair with a first device associated with an identifier and a reference visual representation. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carry out the processing method described with reference to figure 2. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limiting embodiments, the processing device 3 is a device, which belongs to a set comprising:

- a set top box device;
- a digital media player device;
- a TV device;
- a mobile device ;
- a game device ;
- a tablet (or tablet computer) ;
- a smartphone;
- a laptop;
- a communication device ;
- an Internet gateway device;
- a web server;
- a cloud computing instance.

**Claims**

1. A method for pairing a first device (11) with a second device (14), wherein said first device (11) is associated with an identifier and a reference visual representation (10), said method comprising in said second device (14):

    - Receiving (S20) said identifier associated with said first device (11);
    - Obtaining (S22) a visual representation (100) from a number generated by a number generator seeded with said identifier;
    - Displaying (S24) said visual representation (100);
    - Pairing (S28) said first device (11) with said second device (14) in case said obtained visual representation (100) corresponds to said reference visual representation (10) associated with said first device (11).

2. The method according to claim 1, wherein said identifier of said first device is at least one among:

    - A serial number of said first device;
    - A MAC address of said first device.

3. The method according to any of claims 1 to 2, wherein said number generator is a pseudo-random number generator.

4. The method according to any of claims 1 to 3, wherein said obtaining (S22) said visual representation (100) further comprises:

    - sending said identifier associated with said first device (11) to a third party device;

- generating (S224) an image as said visual representation (100) from an adjusted number received from said third party device, wherein a quality factor obtained from an image generated from said adjusted number is comprised in an interval of values.

5. The method according to any of claims 1 to 3, wherein said obtaining (S22) said visual representation (100) further comprises:

- (a) generating (S224) an image from said generated number;
- (b) obtaining (S226) a quality factor from said generated image;
- in case said quality factor is not comprised in an interval of values, adjusting (S229) said generated number and iterating on steps (a) and (b) with the adjusted generated number;

wherein said visual representation (100) is the generated image in case said quality factor is comprised in said interval of values.

6. The method according to any of claims 4 to 5, wherein said generating (S224) an image further comprises applying a random art generator to said generated number.

7. The method according to claim 5, wherein said adjusting (S229) comprises increasing said generated number by a constant number.

8. The method according to any of claims 5 to 7, wherein said quality factor is obtained (S226) from a visual hash of said generated image.

9. The method according to claim 8, wherein said quality factor further comprises a global entropy of said generated image, said interval of values being the values above a given value.

10. The method according to any of claims 7 or 8, wherein said quality factor further comprises an energy of said generated image, said interval of values being the values above a first value and below a second value.

11. The device (3,14) for pairing with a first device (11) associated with an identifier and a reference visual representation (10), said device comprising:

- Means for receiving said identifier associated with said first device (11);
- Means for obtaining a visual representation (100) from a number generated by a number generator seeded with said identifier;
- Means for displaying said visual representation (100);
- Means for pairing with said first device (11) in case said obtained visual representation (100) corresponds to said reference visual representation (10) associated with said first device (11).

12. The device (3,14) according to claim 11, wherein said means for obtaining said visual representation further comprise:

- Means for generating (a) an image from said generated number;
- Means for obtaining (b) a quality factor from said generated image;
- Means for adjusting said generated number in case said quality factor is not comprised in an interval of values, and iterating on said generating an image and said obtaining a quality factor, with the adjusted generated number, in case said quality factor is not comprised in an interval of values;

wherein said visual representation is the generated image in case said quality factor is comprised in said interval of values.

13. The device (3,14) according to claim 12, wherein said means for generating an image further comprise means for applying a random art generator to said generated number.

14. A computer program for pairing a first device (11) with a second device (14), wherein said first device (11) is associated with an identifier and a reference visual representation (10), said computer program comprising program code instructions executable by at least one processor for:

- Receiving (S20) said identifier associated with said first device (11);
- Obtaining (S22) a visual representation (100) from a number generated by a number generator seeded with said identifier;
- Displaying (S24) said visual representation (100);
- Pairing (S28) said first device (11) with said second device (14) in case said obtained visual representation (100) corresponds to said reference visual representation (10) associated with said first device (11).

15. A computer program product for pairing a first device (11) with a second device (14), wherein said first device (11) is associated with an identifier and a reference visual representation (10), said computer program product being stored on a non-transitory computer readable medium and comprising program code instructions executable by at least one processor for:

- Receiving (S20) said identifier associated with said first device (11);
- Obtaining (S22) a visual representation (100) from a number generated by a number generator seeded with said identifier;
- Displaying (S24) said visual representation (100);
- Pairing (S28) said first device (11) with said second device (14) in case said obtained visual representation (100) corresponds to said reference visual representation (10) associated with said first device (11).

Figure 1

2/4

Figure 2

2

30

32

34

38

Figure 3

3

430

420

410

440

Figure 4

Figure 5

Figure 6

Europäisches
Patentamt

European
Patent Office

Office européen
des brevets

## EUROPEAN SEARCH REPORT

Application Number

EP 16 30 5632

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/320587 A1 (VAUCLAIR MARC [BE] ET AL) 25 December 2008 (2008-12-25)<br>* paragraph [0027] *<br>* paragraph [0039] *<br>* paragraph [0051] *<br>* paragraph [0052] *<br>----- | 1-15 | INV.<br>H04W12/06<br>G06F21/36<br>H04L29/06 |
| Y,D | ADRIAN PERRIG ET AL: "Hash Visualisation: a New Technique to improve Real-World Security",<br>INTERNET CITATION,<br>1 February 2012 (2012-02-01), pages 131-138, XP002668506,<br>Retrieved from the Internet:<br>URL:http://www.netsec.ethz.ch/publications /papers/validation.pdf<br>[retrieved on 2016-08-24]<br>* the whole document *<br>----- | 1-15 | |
| A | HSU-CHUN HSIAO ET AL: "A Study of User-Friendly Hash Comparison Schemes",<br>COMPUTER SECURITY APPLICATIONS CONFERENCE, 2009. ACSAC '09. ANNUAL, IEEE, PISCATAWAY, NJ, USA,<br>7 December 2009 (2009-12-07), pages 105-114, XP031610124,<br>ISBN: 978-0-7695-3919-5<br>* the whole document *<br>----- | 1-15 | TECHNICAL FIELDS SEARCHED (IPC)<br><br>H04W<br>G06F<br>H04L |

The present search report has been drawn up for all claims

| Place of search | Date of completion of the search | Examiner |
|---|---|---|
| Munich | 26 August 2016 | Medvesan, Oana |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 30 5632

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2016

| Patent document cited in search report | Publication date | Patent family member(s) | Publication date |
|---|---|---|---|
| US 2008320587 A1 | 25-12-2008 | AT 459158 T | 15-03-2010 |
| | | CN 101015173 A | 08-08-2007 |
| | | EP 1635508 A1 | 15-03-2006 |
| | | EP 1792442 A1 | 06-06-2007 |
| | | JP 4739342 B2 | 03-08-2011 |
| | | JP 2008512891 A | 24-04-2008 |
| | | KR 20070050057 A | 14-05-2007 |
| | | US 2008320587 A1 | 25-12-2008 |
| | | WO 2006027725 A1 | 16-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADRIAN PERRIG ; DAWN SONG.** Hash Visualization: a new technique to improve real world security. *Proceedings of the 1999 International Workshop on Cryptographic Techniques and E-Commerce (CryTEC'99),* 1999

- **OLIVIER LE MEUR.** a coherent computational approach to model bottom-up visual attention. *IEEE Transactions on Pattern Analysis & Machine Intelligence Revue,* vol. 5, 802-817
- **F LEFEBVRE ; B MACQ.** RASH: Radon Soft hash algorithm. *Proceedings of the European Signal Processing Conference,* 2002